Europäisches Patentamt

European Patent Office

Office européen des brevets

(19)

(11) **EP 1 339 978 B1**

(12) **EUROPÄISCHE PATENTSCHRIFT**

(45) Veröffentlichungstag und Bekanntmachung des Hinweises auf die Patenterteilung:
**30.06.2004 Patentblatt 2004/27**

(21) Anmeldenummer: **01999743.6**

(22) Anmeldetag: **06.12.2001**

(51) Int Cl.⁷: **F02M 65/00**, G01F 23/26

(86) Internationale Anmeldenummer:
**PCT/DE2001/004552**

(87) Internationale Veröffentlichungsnummer:
**WO 2002/046606 (13.06.2002 Gazette 2002/24)**

(54) **VORRICHTUNG UND VERFAHREN ZUM MESSEN DER EINSPRITZMENGE VON EINSPRITZDÜSEN, INSBESONDERER FÜR KRAFTFAHRZEUGE**

DEVICE AND METHOD FOR MEASURING THE INJECTION QUANTITY OF INJECTION NOZZLES, ESPECIALLY FOR MOTOR VEHICLES

DISPOSITIF ET PROCEDE DE MESURE DE DEBIT D'INJECTION D'INJECTEURS, EN PARTICULIER POUR VEHICULES A MOTEUR

(84) Benannte Vertragsstaaten:
**AT BE CH CY DE DK ES FI FR GB GR IE IT LI LU MC NL PT SE TR**

(30) Priorität: **06.12.2000 DE 10060477**

(43) Veröffentlichungstag der Anmeldung:
**03.09.2003 Patentblatt 2003/36**

(73) Patentinhaber: **ROBERT BOSCH GMBH**
**70442 Stuttgart (DE)**

(72) Erfinder:
• **SCHOEFFEL, Eberhard**
**96049 Bamberg (DE)**
• **BRAUN, Hans**
**70178 Stuttgart (DE)**
• **LAFRENZ, Fabian**
**74321 Bietigheim-Bissingen (DE)**
• **SEIDEL, Josef**
**96149 Breitengüssbach (DE)**

(56) Entgegenhaltungen:
**EP-A- 0 378 304          DE-A- 3 240 622**

## Beschreibung

Stand der Technik

Die vorliegende Erfindung betrifft zunächst eine Vorrichtung zum Messen der Einspritzmenge von Einspritzdüsen, insbesondere für Kraftfahrzeuge und insbesondere in der Fertigungsprüfung, mit mindestens einer bereichsweise mit einem Prüffluid gefüllten Messkammer, einer Koppeleinrichtung, durch die mindestens eine Einspritzdüse an die Messkammer ankoppelbar ist, einer Erfassungseinrichtung, die wenigstens zeitweise bei einer Einspritzung durch die Einspritzdüse eine Zustandsänderung des Prüffluids in der Messkammer erfasst, und einer Verarbeitungseinheit, welche aus dem Signal der Erfassungseinrichtung eine der Zustandsänderung entsprechende Einspritzmenge bestimmt.

Eine solche Vorrichtung ist vom Markt her bekannt und wird als EMI (Einspritzmengenindikator) bezeichnet. Dieser besteht aus einem Zylinder, in dem ein Kolben geführt ist. Der Innenraum des Zylinders und der Kolben begrenzen eine Messkammer. Diese weist eine Öffnung auf, an die eine Einspritzdüse druckdicht ansetzbar ist. Spritzt die Einspritzdüse Kraftstoff in die Messkammer ein, bewegt sich der Kolben, was von einem Wegsensor erfasst wird. Aus dem Weg des Kolbens kann auf die Volumenänderung der Messkammer und hierdurch auf die eingespritzte Kraftstoffmenge geschlossen werden.

Der bekannte Einspritzmengenindikator hat jedoch verschiedene Nachteile. Zum einen umfasst er bewegliche Teile, die bei dem dauernden Gebrauch einer solchen Vorrichtung einem Verschleiß unterliegen. Dieser ist daher relativ groß, da moderne Einspritzdüsen nicht nur stichprobenartig, sondern kontinuierlich bei der Fertigung geprüft werden. Durch diesen Verschleiß wird im Laufe der Lebensdauer eines solchen Einspritzmengenindikators das Messergebnis verfälscht und letztlich die Lebensdauer des Einspritzmengenindikators verkürzt.

Darüber hinaus kommt es zwischen dem Kolben und dem Zylinder zu Reibung, welche die freie Bewegung des Kolbens behindert und dazu führt, dass die Bewegung des Kolbens nicht vollständig dem eigentlich eingespritzten Kraftstoffvolumen entspricht. Die Messgenauigkeit des Einspritzmengenindikators ist daher begrenzt. Schließlich ist es insbesondere bei Einspritzdüsen für moderne DieselBrennkraftmaschinen auch erforderlich, sehr kleine Einspritzmengen zuverlässig zu messen. Derartige Messungen sind mit dem bekannten Einspritzmengenindikator nur schwer oder überhaupt nicht möglich.

Die vorliegende Erfindung hat daher die Aufgabe, eine Vorrichtung der eingangs genannten Art so weiterzubilden, dass mit ihr mit hoher Genauigkeit über ihre gesamte Lebensdauer eine Messung der Einspritzmenge von Einspritzdüsen möglich ist und dabei auch sehr kleine Einspritzmengen zuverlässig gemessen werden können.

Diese Aufgabe wird dadurch gelöst, dass die Erfassungseinrichtung einen Kondensator umfasst, dessen eine Elektrode aus einem elektrisch leitfähigen Fluid gebildet ist, welches wenigstens bereichsweise in einem mit der Messkammer verbundenen Volumen gehalten ist, und die Verarbeitungseinheit so mit dem Kondensator verbunden ist, dass sie eine durch eine Bewegung des elektrisch leitfähigen Fluids bewirkte Änderung seiner Kapazität erfassen kann.

Vorteile der Erfindung

Bei der erfindungsgemäßen Vorrichtung ist kein mechanischer Kolben vorhanden. Stattdessen wird durch die bei einer Einspritzung erfolgende Volumenänderung der Messkammer ein Volumen eines elektrisch leitenden Fluids bewegt. Natürlich ist auch eine solche Bewegung reibungsbehaftet, dies jedoch um mehrere Größenordnungen weniger als bei einem mechanischen Kolben. Die Erfassung und Quantifizierung der Bewegung des Fluidvolumens erfolgt ebenfalls reibungs- und verschleißfrei dadurch, dass das Fluidvolumen eine Elektrode eines Kondensators bildet. Die durch eine Bewegung der Elektrode bewirkte Kapazitätsänderung kann mit höchster Genauigkeit ohne jede Drift über die Lebensdauer der Vorrichtung bestimmt werden.

Vorteilhafte Weiterbildungen der Erfindung sind in Unteransprüchen aufgeführt:

Eine Weiterbildung zeichnet sich dadurch aus, dass in dem Volumen mindestens ein länglicher elektrischer Leiter so angeordnet ist, dass er sich in seiner Längsrichtung durch eine bewegliche Grenzfläche des elektrisch leitfähigen Fluids hindurcherstreckt, wobei der elektrische Leiter nach außen hin durch ein Dielektrikum isoliert ist und auf diese Weise eine stationäre Elektrode des Kondensators bildet.

Diese erfindungsgemäße Vorrichtung verwendet zur Erfassung einer Volumenänderung des Prüffluids also einen Rohrkondensator. Dieser besteht aus einem länglichen elektrischen Leiter, welcher eine radial innen liegende erste Elektrode des Kondensators bildet. Um diese innere Elektrode ist nach außen hin eine Isolierung angeordnet. Die zweite Elektrode des Rohrkondensators wird durch das elektrisch leitende Fluid gebildet. Dabei ist die Kapazität des Rohrkondensators abhängig von der Größe der Elektroden. Ist ein längerer Bereich des elektrischen Leiters von dem elektrisch leitfähigen Fluid umgeben, ist die Kapazität des Kondensators größer als in jenem Fall, in dem vergleichsweise nur eine kleine Längserstreckung des elektrischen Leiters von dem elektrisch leitfähigen Fluid umgeben ist.

Das Volumen, in dem das elektrisch leitfähige Fluid gehalten ist, ist jedoch mit der Messkammer und dem in dieser gefassten Prüffluid verbunden. Ändert sich das Volumen des Prüffluids, wird hierdurch das elektrisch leitfähige Fluid in entsprechender Weise verdrängt, wodurch sich die Grenzfläche des elektrisch leitfähigen Fluids, welche von dem elektrischen Leiter durchstoßen wird, verschiebt. Somit ändert sich in diesem Fall auch die Länge des elektrischen Leiters, welcher von elektrisch leitfähigem Fluid umgeben ist, was wiederum zu einer Veränderung der Kapazität des Rohrkondensators führt. Diese Veränderung der Kapazität wird von der Verarbeitungseinheit erfasst. Formelmäßig kann die Veränderung der Kapazität des gebildeten Rohrkondensators durch folgende Beziehung ausgedrückt werden:

$$dC<pF> = 0{,}0556 \text{ x } dL<mm> \text{ x } \varepsilon/\ln(D/d),$$

wobei:

dC = Änderung der Kapazität,
dL = Verschiebung der Grenzfläche,
$\varepsilon$ = Permittivität,
D = Außendurchmesser des Dielektrikums,
d = Außendurchmesser des elektrischen Leiters.

Auf diese Weise kann bei der erfindungsgemäßen Vorrichtung vollständig auf bewegliche Teile verzichtet werden. Verschleiß oder Reibung treten bei einer solchen Messvorrichtung also überhaupt nicht auf. Daher können auch kleinste Einspritzmengen von der erfindungsgemäßen Vorrichtung erfasst werden.

Weiterhin wird vorgeschlagen, dass zwischen Einspritzdüse und und der beweglichen Grenzfläche ein Strömungsberuhiger angeordnet ist, der insbesondere einen porösen, weiter vorzugsweise einen Sinterkörper umfasst. Auf diese Weise wird verhindert, dass ein Einspritzimpuls, welcher von der Einspritzdüse in die Messkammer gerichtet wird, zu einer Turbulenz im leitfähigen Fluid bzw. einer Verformung der Grenzfläche führt, welche das Messergebnis verfälschen kann. Insgesamt wird also durch einen solchen Strömungsberuhiger das Messergebnis noch genauer.

Bei einer anderen Weiterbildung wird vorgeschlagen, dass das durch das elektrisch leitfähige Fluid gebildete Volumen mindestens bereichsweise durch eine vorgespannte Wand, insbesondere eine Gasfeder begrenzt wird. Durch eine derartige vorgespannte Wand bzw. Gasfeder wird das elektrisch leitfähige Fluid unter Druck gesetzt, wodurch auch das mit dem elektrisch leitfähigen Fluid verbundene Prüffluid in der Messkammer mit dem entsprechenden Druck beaufschlagt wird. Durch die Vorspannung der Wand bzw. die Gasfeder wird es jedoch gestattet, dass bei einer Einspritzung durch die Einspritzdüse und der damit verbundenen Volumenvergrößerung des Prüffluids ein Raum vorhanden ist, in den das von dem Prüffluid verdrängte elektrisch leitfähige Fluid entweichen kann.

Dabei ist besonders bevorzugt, wenn die Gasfeder eine Membran umfasst, welche auf einer Seite durch ein Gas beaufschlagt ist. Eine solche Ausbildung der Gasfeder ermöglicht es, einen relativ konstanten Druck im elektrisch leitfähigen Fluid sowie im Prüffluid aufrechtzuerhalten. Darüber hinaus bedarf eine solche Gasfeder keinerlei Wartung, und der Druck im elektrisch leitfähigen Fluid ist durch eine entsprechende Einstellung des Gasdrucks hinter der Membran in beliebiger Weise einstellbar.

Die Erfindung zeigt auch, wie auf einfache Art und Weise die Signalstärke bei einer Änderung der Kapazität erhöht werden kann: So wird vorgeschlagen, dass die Vorrichtung eine Mehrzahl von im Wesentlichen parallel zueinander angeordneten und parallel geschalteten stationären Elektroden umfasst. Auf diese Weise werden mehrere parallel geschaltete Kondensatoren geschaffen, welche über eine gleiche Elektrode verfügen (nämlich das elektrisch leitfähige Fluid) und die somit bei einer Einspritzung alle eine Kapazitätsänderung erfahren. Hierdurch wird die Messgenauigkeit insbesondere bei kleinen Einspritzmengen deutlich erhöht.

Besonders günstig lassen sich die stationären Elektroden dann anordnen, wenn das Volumen mit dem elektrisch leitfähigen Fluid im Wesentlichen kreisförmigen Querschnitt hat. Die stationären Elektroden, z.B. die elektrischen Leiter, sollten dann möglichst parallel zur Längsrichtung des des Volumens angeordnet werden.

Dabei wird auch vorgeschlagen, dass mindestens ein Teil der stationären Elektroden in radialer Richtung gesehen in den Flächenschwerpunkten im Wesentlichen gleich großer Flächen angeordnet ist. In diesem Fall haben die "flüssigen" Elektroden der einzelnen Kondensatoren die gleiche Größe und die entsprechenden Kondensatoren im Wesentlichen die gleiche Kapazität bzw. Empfindlichkeit. Dies erleichtert die Messung. Sind die stationären Elektroden gleichmäßig über den Querschnitt des Volumens verteilt, hat dies darüber hinaus den Vorteil, dass die Form der Grenzfläche, welche z.B. aufgrund von Turbulenzen nicht unbedingt absolut eben sein muss, über die einzelnen Kondensatoren bzw. elektrischen Leiter gemittelt wird. Hierdurch werden Störungen aufgrund der Unebenheit der Grenzfläche eliminiert, welche geometrisch größer sind als der mittlere Abstand der einzelnen elektrischen Leiter voneinander.

Vorzugsweise weist die stationäre Elektrode außen eine dielektrische Beschichtung auf, die vorzugsweise Teflon umfasst. Mit einer solchen Beschichtung kann die Dicke des Dielektrikums klein gehalten werden, und Teflon verhindert aufgrund seiner wasserabstoßenden Eigenschaften die Bildung von leitfähigen wässrigen Oberflächenbelägen, durch die die Messungen gestört werden könnten.

In einer Weiterbildung der erfindungsgemäßen Vorrichtung wird vorgeschlagen, dass das Prüffluid Öl und das elektrisch leitfähige Fluid Wasser, insbesondere Salzwasser, umfasst. Der Einsatz von Öl als Prüffluid simuliert besonders gut die Viskosität und Strömungseigenschaften von Dieselkraftstoff, wohingegen Wasser, insbesondere Salzwasser, die für die Bildung eines Kondensators erforderliche Leitfähigkeit aufweist.

In einer anderen Weiterbildung wird noch vorgeschlagen, dass die Grenzfläche des elektrisch leitenden Fluids direkt an das Prüffluid angrenzt. Eine derartig gestaltete Vorrichtung bietet sich vor allem dann an, wenn Prüffluid und elektrisch leitendes Fluid aus Stoffen bestehen, welche sich nicht vermischen. Hierzu gehört z.B. die oben aufgeführte Stoffkombination Öl und Wasser.

Schließlich wird in einer Weiterbildung noch vorgeschlagen, dass die Vorrichtung ein Gehäuse umfasst, in dem das Volumen mit dem elektrisch leitenden Fluid mindestens teilweise gebildet ist und dass das Gehäuse ein elektrisch leitendes Material umfasst, welches mit der Verarbeitungseinheit elektrisch verbunden ist, und die stationäre Elektrode gegenüber dem Gehäuse isoliert ist. Bei dieser Ausbildung der erfindungsgemäßen Vorrichtung wird eine einfache Verbindung zwischen der durch das elektrisch leitfähige Fluid gebildeten Elektrode und der Verarbeitungseinheit geschaffen.

Die Erfindung betrifft auch ein Verfahren zum Messen der Einspritzmenge von Einspritzdüsen insbesondere für Kraftfahrzeuge und insbesondere in der Fertigungsprüfung, bei dem eine Einspritzdüse an eine mindestens bereichsweise mit einem Prüffluid gefüllte Messkammer druckdicht angekoppelt, die Zustandsänderung des Prüffluids aufgrund einer Einspritzung der Einspritzdüse in die Messkammer erfasst und aus der Zustandsänderung eine Einspritzmenge bestimmt wird.

Zur Erhöhung der Messgenauigkeit wird erfindungsgemäß vorgeschlagen, dass eine Zustandsänderung des Prüffluids eine Bewegung eines elektrisch leitenden Fluids zur Folge hat, welches wiederum eine Elektrode eines Kondensators bildet, und die Änderung der Kapazität des Kondensators erfasst wird, die durch eine Bewegung der Grenzfläche des elektrisch leitfähigen Fluids bewirkt wird. Ein solches Verfahren arbeitet ohne jede beweglichen Teile, so dass Störungen der Messung aufgrund von Reibung und dem damit zusammenhängenden Verschleiß erheblich vermindert bzw. ausgeschlossen werden können. Das erfindungsgemäße Verfahren arbeitet daher mit sehr hoher Präzision.

Zeichnung

Nachfolgend wird ein Ausführungsbeispiel der Erfindung unter Bezugnahme auf die beiliegende Zeichnung im Detail erläutert. In der Zeichnung zeigen:

Fig. 1: eine schematisierte, teilweise geschnittene Seitenansicht einer Vorrichtung zum Messen der Einspritzmenge von Einspritzdüsen;

Fig. 2: eine Ansicht eines Details der Vorrichtung von Fig. 1; und

Fig. 3: einen Schnitt durch die Vorrichtung von Fig. 1 längs der Linie III-III.

Beschreibung des Ausführungsbeispiels

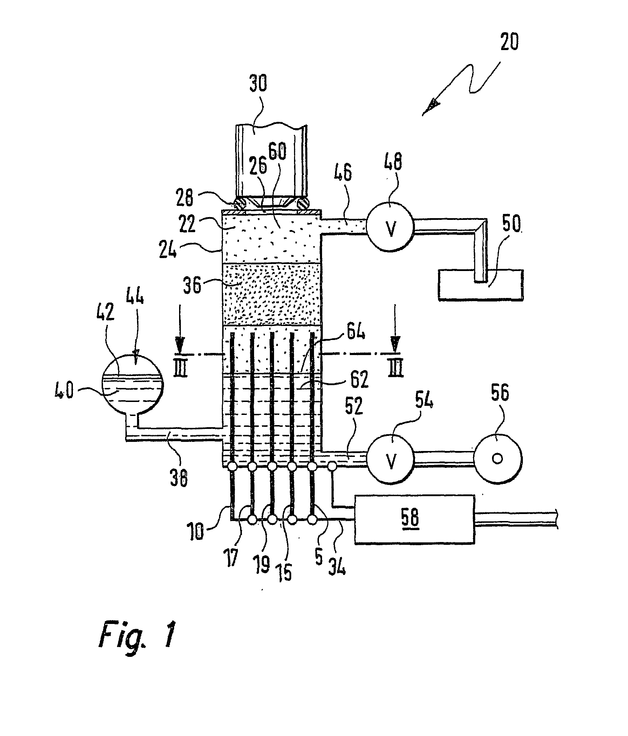

Eine Vorrichtung zum Messen der Einspritzmenge von Einspritzdüsen trägt in Fig. 1 das Bezugszeichen 20. Sie umfasst eine zylindrische Messkammer 22, die im oberen Bereich eines zylindrischen Gehäuses 24 gebildet ist. An der in Fig. 1 oberen Stirnseite des Gehäuses 24 ist eine Öffnung 26 vorhanden, welche außen von einer O-Ringdichtung 28 umgeben ist. Auf diese ist die Spitze einer Einspritzdüse 30 aufgesetzt. Bei dieser Einspritzdüse 30 handelt es sich um eine solche, welche in Brennkraftmaschinen für Kraftfahrzeuge und hier insbesondere für Brennkraftmaschinen, welche mit Diesel- oder Benzin-Direkteinspritzung arbeiten, verwendet wird. Die Öffnung 26 ist dabei im Regelfall durch ein Ventil (nicht dargestellt) verschlossen, welches nur dann öffnet, wenn eine Einspritzdüse 30 auf die O-Ringdichtung 28 bzw. in die Öffnung 26 eingesetzt wird.

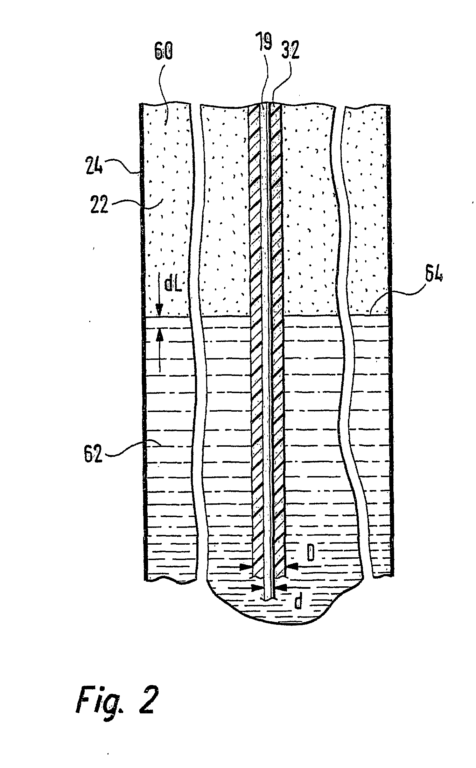

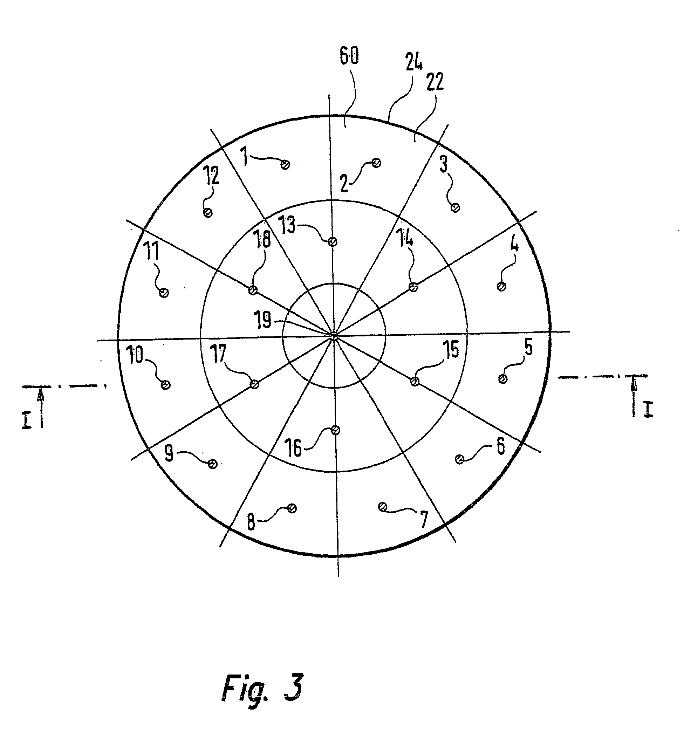

Das Gehäuse 24 besteht aus Metall. Durch seine in Fig. 1 untere Stirnwand sind insgesamt 19 längliche elektrische Leiter hindurchgeführt, welche sich parallel zur Längsachse des Gehäuses 24 nach oben bis etwas über die halbe Höhe des Gehäuses 24 erstrecken. In Figur 1 sind aus Gründen der Übersichtlichkeit nur fünf Leiter dargestellt, welche die Bezugszeichen 5, 10, 15, 17 und 19 tragen. In Figur 3 sind alle 19 Leiter dargestellt, welche die Bezugszeichen 1 bis 19 tragen. Wie aus Figur 3 hervorgeht, sind die elektrischen Leiter 1 - 19 im Schwerpunkt gleich großer Flächenbereiche angeordnet. Der Sinn dieser Maßnahme ist weiter unten erläutert. Wie aus Fig. 2 ersichtlich ist, sind die elektrischen Leiter 1 - 19 jeweils auf ihrer Außenseite mit einer dielektrischen Schicht 32 beschichtet. Die elektrischen Leiter 1 - 19 sind darüber hinaus elektrisch gegenüber dem Gehäuse 24 isoliert und außerhalb des Gehäuses 24 mit einer Sammelleitung 34 verbunden. Zwischen den in Fig. 1 oberen Enden der elektrischen Leiter 1 - 19 und der Öffnung 26 im Gehäuse 24 ist ein scheibenförmiger Sinterkörper 36 in der Messkammer 22 angeordnet.

Vom unteren Bereich des Gehäuses 24 zweigt eine Leitung 38 ab, welche zu einem Ausgleichsgefäß 40 führt. Dieses ist insgesamt kugelförmig, und in seinem oberen Bereich ist eine im Regelfalle horizontale Membran 42 gespannt. Der Raum zwischen der Membran 42 und dem oberen Bereich des Ausgleichsgefäßes 40 ist mit einem Gas gefüllt, so dass hierdurch eine Gasfeder 44 gebildet ist. Die Messkammer 22 im oberen Bereich des Gehäuses 24 ist ferner über eine Leitung 46 und ein Ventil 48 mit einem Überlauf 50 verbunden. Vom unteren Bereich des Gehäuses 24 zweigt ebenfalls eine Leitung 52 ab, die über ein Ventil 54 mit einer Speiseeinrichtung 56 in Verbindung gebracht werden kann.

Schließlich ist noch eine elektronische Verarbeitungseinheit 58 vorgesehen, die elektrisch einerseits mit der Sammelleitung 34 und andererseits mit dem metallischen Gehäuse 24 verbunden ist.

Wie insbesondere aus Fig. 1 ersichtlich ist, ist die Messkammer 22 mit einem Prüföl 60 gefüllt, welches eine endliche und bekannte Kompressibilität aufweist. Der untere Bereich des Gehäuses 24 ist mit einem elektrisch leitfähigen Fluid gefüllt, im vorliegenden Fall mit einer Salzwasserlösung 62. Da das Prüföl 60 spezifisch leichter ist als die Salzwasserlösung 62, ergibt sich von selbst die in Fig. 1 dargestellte Schichtung. Die Salzwasserlösung 62 grenzt dabei direkt mit einer Grenzfläche 64 an das Prüföl an. Die Mengen des in dem Gehäuse 24 befindlichen Prüföls 60 und der Salzwasserlösung 62 sind dabei so aufeinander abgestimmt, dass die Grenzfläche 64 etwas unterhalb der oberen Enden der elektrischen Leiter 1 - 19 liegt.

Durch die elektrischen Leiter 1 - 19 und die sie umgebende Salzwasserlösung 62 werden insgesamt 19 Rohrkondensatoren gebildet, deren eine Elektrode durch den elektrischen Leiter 1 - 19 und deren andere Elektrode durch die Salzwasserlösung 62 gebildet ist. Die beiden Elektroden sind um die Dicke der dielektrischen Schicht 32 voneinander getrennt. Die Kapazität eines einzelnen solchermaßen gebildeten Kondensators ergibt sich nach folgender Beziehung:

$$C = 0{,}0556 \times L \times \varepsilon : \ln(D/d),$$

wobei:

C = Kapazität,
L = Längserstreckung eines elektrischen Leiters 1 - 19, welche von Salzwasserlösung 62 umgeben ist,
ε = Permittivität,
D = Außendurchmesser der dielektrischen Schicht 32,
d = Außendurchmesser eines elektrischen Leiters 1 - 19.

Durch die Parallelschaltung der durch die elektrischen Leiter 1 - 19 und die Salzwasserlösung 62 gebildeten Kondensatoren über die Sammelleitung 34 ergibt sich eine Gesamtkapazität entsprechend dem 19-fachen der Einzelkapazität eines Kondensators. Aus der obigen Beziehung ergibt sich, dass die Kapazität C von der Längserstreckung des elektrischen Leiters 1 - 19 abhängt, welche von Salzwasserlösung 62 umgeben ist. Es sei an dieser Stelle darauf hingewiesen, dass in jenem Bereich der elektrischen Leiter 1 - 19, welche von Prüföl 60 umgeben sind, die äußere Elektrode durch das Metallgehäuse 24 gebildet wird. Diese hat einen vergleichsweise sehr großen Abstand von den elektrischen Leitern 1 - 19, so dass deren Kapazität im Vergleich zu der oben bezeichneten Kapazität vernachlässigbar gering ist.

Ändert sich nun die Längserstreckung eines elektrischen Leiters 1 - 19, welcher von Salzwasserlösung 62 umgeben ist, indem sich die Grenzfläche 64 um einen Betrag dL verschiebt (vgl. Fig. 2), ändert sich hierdurch auch die Kapazität des entsprechenden Kondensators. Dieser Zusammenhang wird bei der vorliegenden Vorrichtung 20 zur Messung der von der Einspritzdüse 30 in die Messkammer 22 eingespritzten Menge an Prüföl 60 in folgender Weise verwendet:

Wenn die Einspritzdüse 30 durch die Öffnung 26 hindurch Prüföl in das Gehäuse 24 einspritzt, vergrößert sich das Volumen des Prüföls 60 in der Messkammer 22 aufgrund der bekannten und endlichen Kompressibilität des Prüföls 60. Hierdurch wird die Salzwasserlösung 62 um das eingespritzte Volumen aus dem Gehäuse 24 verdrängt, was wiederum bedeutet, dass sich die Grenzfläche 64 um einen Betrag dL nach unten verschiebt. Die Salzwasserlösung 62 strömt dabei über die Leitung 38 in das Ausgleichsgefäß 40 und drückt die Membran 42 gegen den Gasdruck der Gasfeder 44 etwas nach oben. Durch die Gasfeder 44 werden also die Salzwasserlösung 62 und das Prüföl 60 auf einem im Wesentlichen konstanten Druck gehalten.

Durch die Verschiebung der Grenzfläche 64 um den Betrag dL ändert sich die Kapazität eines jeden aus einem elektrischen Leiter 1 - 19 und der Salzwasserlösung 62 gebildeten Kondensators um einen Wert dC. Dieser Wert ergibt sich nach folgender Formel:

$$dC = 0{,}0556 \times dL \times \varepsilon/\ln(D/d).$$

Da die einzelnen Kondensatoren gleichmäßig über die Querschnittsfläche des Gehäuses 24 verteilt sind, werden durch Turbulenzen hervorgerufene Unebenheiten der Grenzfläche 64 gemittelt bzw. ausgeglichen. Allerdings werden bereits durch den Sinterkörper 36 Turbulenzen im Bereich der Grenzfläche 64 weitgehend vermieden. Die gesamte Kapazitätsänderung aller 19 Kondensatoren entspricht also dem 19-fachen einer Kapazitätsänderung eines einzelnen Kondensators. Eine solche Änderung der Kapazität der Kondensatoren wird von der Verarbeitungseinheit 58 erfasst und entsprechend einer zuvor erstellten Kalibriertabelle in ein Einspritzvolumen umgewandelt.

Mit der beschriebenen Vorrichtung 20 kann somit die Menge eines von der Einspritzdüse 30 in die Messkammer 22 eingespritzten Prüföls 60 bestimmt werden, ohne dass bewegliche mechanische Teile bei der Vorrichtung 20 erforderlich sind. Darüber hinaus erfolgt durch die Möglichkeit, im Gehäuse 24 eine Vielzahl von einzelnen Kondensatoren anzuordnen, eine "Verstärkung" des Signals, so dass auch kleinste Einspritzmengen sicher erfasst werden können. Die Genauigkeit der Messung wird außerdem noch durch den Sinterkörper 36 erhöht, der dazu beiträgt, dass bei der Absprizung durch die Einspritzdüse 30 in die Messkammer 22 entstehende Turbulenzen von den durch die elektrischen Leiter 1 - 19 und die Salzwasserlösung 62 gebildeten Kondensatoren ferngehalten werden. Dadurch, dass die einzelnen Kondensatoren in den Schwerpunkten gleich großer Flächenstücke angeordnet sind, können deren Kapazitäten einfach aufsummiert werden, ohne dass eine Wichtung einzelner Kondensatoren gegenüber anderen Kondensatoren erforderlich ist.

Die Vorrichtung 20 kann dabei ebenso auf der Einlauf-/Hochdruckseite einer Einspritzdüse 30 als auch auf deren Auslauf-/Niederdruckseite verwendet werden. Sie ist für beinahe beliebige Drücke anwendbar. Der maximal mögliche Druck wird im Grunde nur durch sicherheitstechnische Aspekte der für die Vorrichtung 20 verwendeten Bauelemente begrenzt. Durch die Wahl geeigneter geometrischer Dimensionen und einer geeigneten Anzahl von Kondensatoren kann die Vorrichtung 20 an jede beliebige Messanforderung angepasst werden.

## Patentansprüche

1. Vorrichtung zum Messen der Einspritzmenge von Einspritzdüsen (30) insbesondere für Kraftfahrzeuge und insbesondere in der Fertigungsprüfung, mit mindestens einer bereichsweise mit einem Prüffluid (60) gefüllten Messkammer (22), einer Koppeleinrichtung (28), durch die mindestens eine Einspritzdüse (30) an die Messkammer (22) druckdicht ankoppelbar ist, einer Erfassungseinrichtung, die wenigstens zeitweise bei einer Einspritzung durch die Einspritzdüse (30) eine Zustandsänderung des Prüffluids (60) in der Messkammer (22) erfasst, und einer Verarbeitungseinheit (58), welche aus dem Signal der Erfassungseinrichtung eine der Zustandsänderung entsprechende Einspritzmenge bestimmt, **dadurch gekennzeichnet, dass** die Erfassungseinrichtung einen Kondensator umfasst, dessen eine Elektrode aus einem elektrisch leitfähigen Fluid (62) gebildet ist, welches wenigstens bereichsweise in einem mit der Messkammer (22) verbundenen Volumen gehalten ist, und die Verarbeitungseinheit (58) so mit dem Kondensator verbunden ist, dass sie eine durch eine Bewegung des elektrisch leitfähigen Fluids (62) bewirkte Änderung seiner Kapazität erfassen kann.

2. Vorrichtung nach Anspruch 1, **dadurch gekennzeichnet, dass** in dem Volumen mindestens ein länglicher elektrischer Leiter (1 - 19) so angeordnet ist, dass er sich in seiner Längsrichtung durch eine bewegliche Grenzfläche (64) des elektrisch leitfähigen Fluids (62) hindurcherstreckt, wobei der elektrische Leiter (1 - 19) nach außen hin durch ein Dielektrikum (32) isoliert ist und auf diese Weise eine stationäre Elektrode des Kondensators bildet.

3. Vorrichtung nach einem der Ansprüche 1 oder 2, **dadurch gekennzeichnet, dass** zwischen Einspritzdüse und der beweglichen Grenzfläche (64) ein Strömungsberuhiger angeordnet ist, der insbesondere einen porösen, weiter vorzugsweise einen Sinterkörper umfasst.

4. Vorrichtung nach einem der vorhergehenden Ansprüche, **dadurch gekennzeichnet, dass** das durch das elektrisch leitfähige Fluid (62) gebildete Volumen mindestens bereichsweise durch eine vorgespannte Wand (42), insbesondere durch eine Gasfeder (44) begrenzt wird.

5. Vorrichtung nach Anspruch 4, **dadurch gekennzeichnet, dass** die Gasfeder (44) eine Membran (42) umfasst, welche auf einer Seite durch ein Gas beaufschlagt ist.

6. Vorrichtung nach einem der vorhergehenden Ansprüche, **dadurch gekennzeichnet, dass** sie eine Mehrzahl von im Wesentlichen parallel zueinander angeordneten und parallel geschalteten stationären Elektroden (1 - 19) umfasst.

7. Vorrichtung nach einem der vorhergehenden Ansprüche, **dadurch gekennzeichnet, dass** das Volumen im Wesentlichen kreisförmigen Querschnitt hat.

8. Vorrichtung nach Anspruch 7, **dadurch gekennzeichnet, dass** mindestens ein Teil der stationären Elektroden (1 - 19) in radialer Richtung gesehen in den Flächenschwerpunkten im Wesentlichen gleich großer Flächen angeordnet ist.

9. Vorrichtung nach einem der vorhergehenden Ansprüche, **dadurch gekennzeichnet, dass** die stationäre Elektrode (1 - 19) außen eine dielektrische Beschichtung (32) aufweist, die vorzugsweise Teflon umfasst.

10. Vorrichtung nach einem der vorhergehenden Ansprüche, **dadurch gekennzeichnet, dass** das Prüffluid Öl (60) und das elektrisch leitfähige Fluid Wasser, insbesondere Salzwasser (62), umfasst.

11. Vorrichtung nach einem der vorhergehenden Ansprüche, **dadurch gekennzeichnet, dass** die Grenzfläche (64) des elektrisch leitenden Fluids (62) direkt an das Prüffluid (60) angrenzt.

12. Vorrichtung nach einem der vorhergehenden Ansprüche, **dadurch gekennzeichnet, dass** sie ein Gehäuse (24) umfasst, in dem das Volumen mit dem elektrisch leitenden Fluid (62) mindestens teilweise gebildet ist, und das Gehäuse (24) ein elektrisch leitendes Material umfasst, welches mit der Verarbeitungseinheit (58) elektrisch verbunden ist, und die stationäre Elektrode (1 - 19) gegenüber dem Gehäuse isoliert ist.

13. Verfahren zum Messen der Einspritzmenge von Einspritzdüsen (30) insbesondere für Kraftfahrzeuge und insbesondere in der Fertigungsprüfung, bei dem mindestens eine Einspritzdüse (30) an eine mindestens bereichsweise mit einem Prüffluid (60) gefüllte Messkammer (22) druckdicht angekoppelt, die Zustandsänderung des Prüffluids (60) aufgrund einer Einspritzung der Einspritzdüse (30) in die Messkammer (22) erfasst und aus der Zustandsänderung eine Einspritzmenge bestimmt wird, **dadurch gekennzeichnet, dass** eine Zustandsänderung des Prüffluids (60) eine Bewegung eines elektrisch leitenden Fluids (62) zur Folge hat, welches wiederum eine Elektrode eines Kondensators bildet, und die Änderung der Kapazität des Kondensators erfasst wird, die durch eine Bewegung der Grenzfläche (64) des elektrisch leitfähigen Fluids (62) bewirkt wird.

**Claims**

1. Device for measuring the injection quantity of injection nozzles (30), in particular for motor vehicles and in particular in manufacturing testing, having at least one measuring chamber (22) which is filled in some regions with a test fluid (60), a coupling device (28) by means of which at least one injection nozzle (30) can be coupled to the measuring chamber (22) in a pressure-tight manner, a detection device which, at least temporarily during an injection by the injection nozzle (30), detects a change in state of the test fluid (60) in the measuring chamber (22), and a processing unit (58) which determines, from the signal of the detection device, an injection quantity corresponding to the change in state, **characterized in that** the detection device comprises a capacitor, the one electrode of which is formed from an electrically conductive fluid (62), which is retained, at least in some regions, in a volume connected to the measuring chamber (22), and the processing unit (58) is connected to the capacitor in such a manner that it can detect a change in its capacitance caused by a movement of the electrically conductive fluid (62).

2. Device according to Claim 1, **characterized in that** an elongate, electric conductor (1-19) is arranged in the volume in such a manner that it extends in its longitudinal direction through a moveable boundary surface (64) of the electrically conductive fluid (62), the electrical conductor (1-19) being insulated to the outside by a dielectric (32) and thereby forming a stationary electrode of the capacitor.

3. Device according to either of Claims 1 and 2, **characterized in that** a flow stabilizer comprising, in particular, a porous body, more preferably a sintered body, is arranged between the injection nozzle and the moveable boundary surface (64).

4. Device according to one of the preceding claims, **characterized in that** the volume formed by the electrically conductive fluid (62) is bounded, at least in some regions, by a prestressed wall (42), in particular by a gas-filled spring (44).

5. Device according to Claim 4, **characterized in that** the gas-filled spring (44) comprises a membrane (42) which is acted upon on one side by a gas.

6. Device according to one of the preceding claims, **characterized in that** it comprises a plurality of stationary electrodes (1-19) which are essentially arranged parallel to one another and connected in parallel.

7. Device according to one of the preceding claims, **characterized in that** the volume has an essentially circular cross section.

8. Device according to Claim 7, **characterized in that** at least some of the stationary electrodes (1-19) are arranged, as seen in the radial direction, in the centres of gravity of surfaces of essentially the same size.

9. Device according to one of the preceding claims, **characterized in that** the stationary electrode (1-19) has a dielectric coating (32), which preferably comprises Teflon, on the outside.

10. Device according to one of the preceding claims, **characterized in that** the test fluid comprises oil (60) and the electrically conductive fluid comprises water, in particular salt water (62).

11. Device according to one of the preceding claims, **characterized in that** the boundary surface (64) of the electrically conductive fluid (62) is directly adjacent to the test fluid (60).

12. Device according to one of the preceding claims, **characterized in that** it comprises a housing (24) in which the volume is at least partially formed with the electrically conductive fluid (62), and the housing (24) comprises an electrically conductive material which is electrically connected to the processing unit (58), and the stationary electrode (1-19) is insulated with respect to the housing.

13. Method for measuring the injection quantity of injection nozzles (30), in particular for motor vehicles and in particular in manufacturing testing, in which at least one injection nozzle (30) is connected in a pressure-tight manner to a measuring chamber (22), which is filled at least in some regions with a test fluid (60), the change in state of the test fluid (60) due to an injection of the injection nozzle (30) into the measuring chamber (22) is detected and an injection quantity is determined from the change in state, **characterized in that** a change in state of the test fluid (60) results in a movement of an electrically conductive fluid (62) which, in turn, forms an electrode of a capacitor, and the change in the capacitance of the capacitor is detected, the said change being brought about by a movement of the boundary surface (64) of the electrically conductive fluid (62).

**Revendications**

1. Dispositif pour mesurer la quantité d'injection d'injecteurs (30), en particulier pour des véhicules automobiles et en particulier pour la vérification de fabrication, comportant au moins une chambre de mesure (22) remplie par endroits d'un fluide d'essai (60), une installation de couplage (28) grâce à laquelle au moins un injecteur (30) peut être couplé à la chambre de mesure (22) en conservant la pression, une installation de détection qui détecte au moins par moments une modification d'état du fluide d'essai (60) dans la chambre de mesure (22) lorsque l'injecteur (30) effectue une injection et une unité de traitement (58) qui à partir du signal de l'installation de détection détermine une quantité d'injection qui correspond à la modification d'état,
**caractérisé en ce que**
l'installation de détection comprend un condensateur dont une électrode est constituée d'un fluide (62) électroconducteur qui est au moins par endroits contenu dans un volume relié à la chambre de mesure (22) et l'unité de traitement (58) est reliée au condensateur de telle sorte qu'elle peut détecter une modification de sa capacité due à un mouvement du fluide (62) électroconducteur.

2. Dispositif selon la revendication 1,
**caractérisé en ce qu'**
au moins un conducteur électrique (1 à 19) allongé est disposé dans le volume de telle sorte que dans sa direction longitudinale il s'étend à travers une surface limite (64) mobile du fluide (62) électroconducteur, le conducteur électrique (1 à 19) étant isolé vers l'extérieur par un diélectrique (32) et formant de cette manière une électrode stationnaire du condensateur.

3. Dispositif selon l'une des revendications 1 ou 2,
**caractérisé en ce qu'**

un tranquilliseur d'écoulement qui comprend en particulier un corps poreux et en outre de préférence un corps fritté est placé entre l'injecteur et la surface limite (64) mobile.

4. Dispositif selon l'une des revendications précédentes,
**caractérisé en ce que**
le volume formé par le fluide (62) électroconducteur est limité au moins par endroits par une paroi précontrainte (42), en particulier par un ressort à gaz (44).

5. Dispositif selon la revendication 4,
**caractérisé en ce que**
le ressort à gaz (44) comprend une membrane (42) qui est manoeuvrée d'un côté par un gaz.

6. Dispositif selon l'une des revendications précédentes,
**caractérisé en ce qu'**
il comprend un grand nombre d'électrodes stationnaires (1 à 19) placées presque parallèlement les unes par rapport aux autres et montées en parallèle.

7. Dispositif selon l'une des revendications précédentes,
**caractérisé en ce que**
le volume a une section pratiquement circulaire.

8. Dispositif selon la revendication 7,
**caractérisé en ce que**
vue en direction radiale, au moins une partie des électrodes stationnaires (1 à 19) est placée sur les centres de gravité en aire dont la surface est pratiquement égale.

9. Dispositif selon l'une des revendications précédentes,
**caractérisé en ce que**
les électrodes stationnaires (1 à 19) présentent à l'extérieur un revêtement diélectrique (32) qui comporte de préférence du téflon.

10. Dispositif selon l'une des revendications précédentes,
**caractérisé en ce que**
le fluide d'essai comporte de l'huile (60) et le fluide électroconducteur de l'eau, en particulier de l'eau salée (62).

11. Dispositif selon l'une des revendications précédentes,
**caractérisé en ce que**
la surface limite (64) du fluide (62) électroconducteur touche directement le fluide d'essai (60).

**12.** Dispositif selon l'une des revendications précédentes,
**caractérisé en ce qu'**
il comprend un boîtier (24) dans lequel le volume
est au moins en partie formé à l'aide du fluide (62)
électroconducteur et le boîtier (24) comprend un
matériau électroconducteur qui est électriquement
relié à l'unité de traitement, et l'électrode stationnaire (1 à 19) est isolée du boîtier.

**13.** Dispositif pour mesurer la quantité d'injection d'injecteurs (30), en particulier pour des véhicules automobiles et en particulier pour la vérification de fabrication, pour lequel au moins un injecteur (30) est
couplé - en conservant la pression - à une chambre
de mesure (22) remplie au moins par endroits d'un
fluide d'essai (60), la modification d'état du fluide
d'essai (60) est détectée dans la chambre de mesure (22) du fait que l'injecteur (30) effectue une injection et une quantité d'injection est déterminée à
partir de la modification d'état,
**caractérisé en ce qu'**
une modification d'état du fluide d'essai (60) a pour
conséquence un déplacement d'un fluide (62) électroconducteur qui à son tour forme une électrode
d'un condensateur et l'on détecte la modification de
la capacité du condensateur provoquée par un déplacement de la surface limite (64) du fluide (62)
électroconducteur.

Fig. 1

Fig. 2

Fig. 3